# EUROPÄISCHE PATENTANMELDUNG

(11) **EP 1 748 178 A2**
(43) Veröffentlichungstag der Anmeldung: **31.01.2007**
(21) Anmeldenummer: 06117158.3
(22) Anmeldetag: 13.07.2006
(51) Int. Cl.: F02M 21/02

(54) **Kraftstoffversorgungsanlage für eine gasbetriebene Brennkraftmaschine**

(30) Priorität: 25.07.2005 DE 102005034601
(71) Anmelder: ROBERT BOSCH GMBH, 70442 Stuttgart (DE)
(72) Erfinder: Hezel, Bruno, 70565, Stuttgart (DE); Langer, Winfried, 75428, Illingen (DE); Foerster, Juergen, 74379, Ingersheim (DE); Reif, Martin, 79618, Rheinfelden (DE); Bellot, Marc-Olivier, 70197, Stuttgart (DE); Weikert, Michael, 70734, Fellbach (DE); Weiss, Markus, 73760, Ostfildern (DE)

(57) **Zusammenfassung**

Die Erfindung betrifft eine Kraftstoffversorgungsanlage (44) für eine gasbetriebene Brennkraftmaschine (54), wobei die Kraftstoffversorgungsanlage (44) eine Vorrichtung zur Drucksteuerung und/oder -regelung (50, 150) aufweist, um den Druck eines gasförmigen Kraftstoffs von einem Speicherdruck (p₁) auf einen niedrigeren Systemdruck (p₂) zu senken, wobei die Vorrichtung zur Drucksteuerung und/oder -regelung (50, 150) ein elektromagnetisch betätigtes Ventil (3, 103) aufweist.

## Beschreibung

### Stand der Technik

Die Erfindung betrifft eine Kraftstoffversorgungsanlage für eine gasbetriebene Brennkraftmaschine entsprechend dem Oberbegriff des Anspruchs 1. Die Kraftstoffversorgungsanlage kann für Brennkraftmaschinen von Kraftfahrzeugen und für stationäre Gasmotoren eingesetzt werden.

Eine solche Kraftstoffversorgungsanlage weist einen Kraftstoffspeicher für Gas, insbesondere für Erdgas auf. Der Druck des in dem Kraftstoffspeicher aufgenommenen Gases kann bis zu 250 bar oder mehr betragen. Dieser Speicherdruck wird mit Hilfe einer Vorrichtung zur Drucksteuerung und/oder -regelung auf einen niedrigeren Systemdruck gesenkt, der beispielsweise zwischen 2 und 15 bar beträgt. Der unter Systemdruck stehende Kraftstoff kann dann hydraulisch nachgeschalteten Kraftstoff-Einspritzvorrichtungen einer Brennkraftmaschine zugeführt werden.

Der Druck im Kraftstoffspeicher nimmt im Fahrbetrieb, d.h. mit der Entnahme und dem Verbrauch des gasförmigen Kraftstoffs ab, bis der Speicherdruck annähernd auf das Niveau des Systemdrucks gesunken ist.

Um den Speicherdruck auf den niedrigeren Systemdruck senken zu können, sind aus dem Stand der Technik mechanische Druckregler bekannt, die beispielsweise als Membran- oder Kolbendruckregler ausgebildet sind. Bei diesen Reglern strömt das Gas über eine Drosselöffnung mit veränderbarem Querschnitt und wird dabei auf einen niedrigeren Systemdruck entspannt. Die Einstellung des Öffnungsquerschnitts erfolgt bei den bekannten Druckreglern über die druckabhängige Auslenkung der Membran bzw. des Kolbens. Auf diese Weise kann der Speicherdruck auf den gewünschten Systemdruck gesenkt werden.

Eine Vorrichtung zur Drucksteuerung und/oder -regelung einer Kraftstoffversorgungsanlage für gasbetriebene Kraftfahrzeuge soll bei allen Betriebsbedingungen, also insbesondere unabhängig von dem im Kraftstoffspeicher anliegenden Speicherdruck und unabhängig vom Volumenstrom des gasförmigen Kraftstoffs, einen vorgegebenen Ausgangsdruck liefern können, der dem benötigten Systemdruck entspricht.

Hiervon ausgehend liegt der vorliegenden Erfindung die Aufgabe zugrunde, eine Kraftstoffversorgungsanlage für gasbetriebene Kraftfahrzeuge zu schaffen, mit der in allen Betriebszuständen eine schnelle und genaue Einstellung des Systemdrucks ermöglicht ist.

Diese Aufgabe wird erfindungsgemäß dadurch gelöst, dass die Vorrichtung zur Drucksteuerung und/oder -regelung ein elektromagnetisch betätigtes Ventil aufweist.

### Vorteile der Erfindung

Dadurch, dass die Vorrichtung zur Drucksteuerung und/oder -regelung ein elektromagnetisch betätigtes Ventil aufweist, kann der Systemdruck der Kraftstoffversorgungsanlage in allen Betriebszuständen genau eingestellt werden. Insbesondere kann die Vorrichtung zur Drucksteuerung und/oder -regelung schnell und genau an die sich durch den abnehmenden Speicherdruck ergebenden Druck- und Strömungsverhältnisse angepasst werden.

Mit dem elektromagnetisch betätigten Ventil kann unter Berücksichtigung des benötigten Kraftstoff-Volumenstroms ein vorgegebener Systemdruck eingestellt werden.

Durch die Ausbildung als Ventil in Schieberbauweise arbeitet die Vorrichtung zur Drucksteuerung und/oder -regelung besonders geräuscharm.

Das Ventil kann derart ausgebildet sein, dass es eine gasdichte Absperreinrichtung bildet. Dies bedeutet, dass mit dem Ventil nicht nur im Betrieb des Kraftfahrzeugs ein Speicherdruck auf einen Systemdruck gesenkt werden kann, sondern dass der Kraftstoff mit Hilfe des erfmdungsgemäßen Ventils auch vollständig abgesperrt werden kann. Dies ist beispielsweise im Schubbetrieb einer Brennkraftmaschine eines Kraftfahrzeugs von Vorteil.

Eine gasdichte Absperreinrichtung kann auch zusätzlich oder optional vorgesehen sein und dem Ventil vor- oder nachgeschaltet sein. Eine solche separate Absperreinrichtung hat den Vorteil, dass sie eine zusätzliche Sicherheit gegen unerwünschten Gasdurchtritt bietet.

Besonders kompakt baut die Vorrichtung zur Drucksteuerung und/oder -regelung, wenn das Ventil und die separate Absperreinrichtung an einem gemeinsamen Grundkörper oder in einem gemeinsamen Gehäuse angeordnet sind.

In vorteilhafter Weise weist die Vorrichtung zur Drucksteuerung und/oder -regelung ein Steuergerät zur Ansteuerung des Elektromagneten des Ventils auf. In dem Steuergerät können Kennlinien abgelegt sein, um das erfindungsgemäße Ventil so anzusteuern, dass sich ein gewünschter Systemdruck einstellt.

Wenn die Vorrichtung zur Drucksteuerung und/oder -regelung auch Drucksensoren zur Erfassung des Speicherdrucks und/oder des Systemdrucks aufweist, die mit dem Steuergerät gekoppelt sind, kann ein geschlossener Regelkreis gebildet werden. Mit Hilfe des Sensors, der den Speicherdruck erfasst, kann im Steuergerät eine zugeordnete Stellung des Ventilschiebers ermittelt werden, um den Elektromagneten entsprechend anzusteuern. Ob der gewünschte Systemdruck damit tatsächlich erreicht wird, kann mit Hilfe des Sensors zur Erfassung des Systemdrucks ermittelt werden. Der von diesem Sensor erfasste Wert kann dem Steuergerät übermittelt werden, das einen Abgleich zwischen dem ermittelten Ist- und einem Soll-Wert durchführen kann und die Ansteuerung des Ventils bzw. dessen Elektromagneten entsprechend anpassen kann.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Zeichnungen

Es zeigen:
- Figur 1: eine schematische Darstellung einer Kraftstoffversorgungsanlage eines gasbetriebenen Kraftfahrzeugs mit einer Vorrichtung zur Drucksteuerung und/oder -regelung;
- Figur 2: ein erstes Ausführungsbeispiel der Vorrichtung zur Drucksteuerung und/oder - regelung; und
- Figur 3: eine zweite Ausführungsform der Vorrichtung zur Drucksteuerung und/oder - regelung.

### Beschreibung der Ausführungsbeispiele

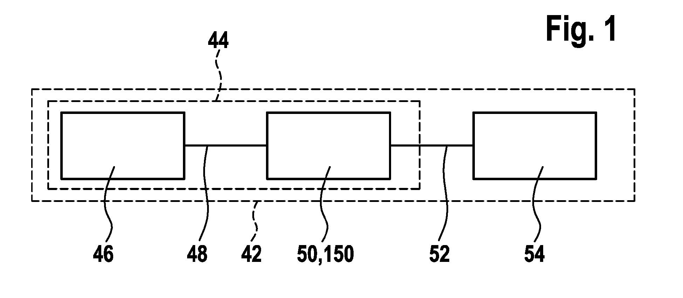

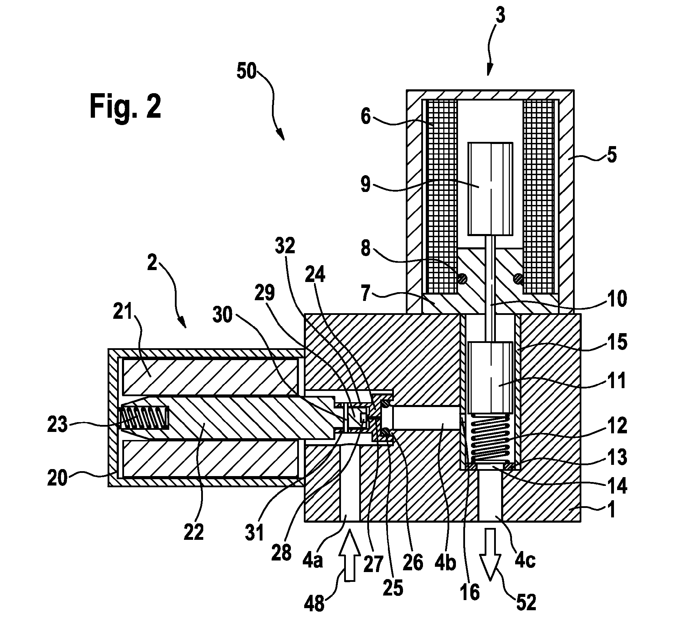

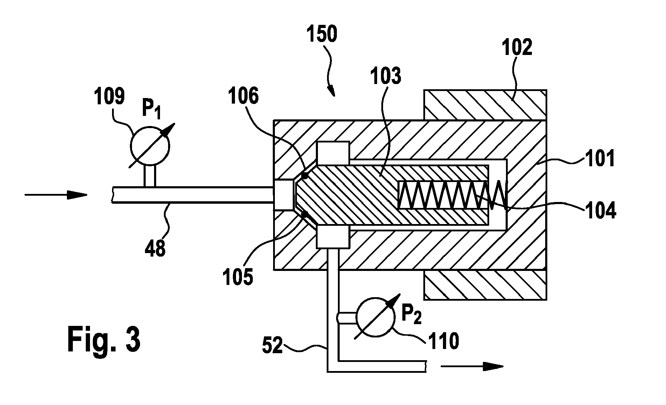

In Figur 1 trägt eine Kraftstoffversorgungsanlage eines schematisch dargestellten Kraftfahrzeugs 42 insgesamt das Bezugszeichen 44. Die Kraftstoffversorgungsanlage 44 umfasst einen Kraftstoffspeicher 46 für unter Druck stehendes Gas, insbesondere für Erdgas. Über eine Leitung 48 kann das im Kraftstoffspeicher 46 enthaltene Gas zu einer Vorrichtung zur Drucksteuerung und/oder -regelung 50 gelangen, die mit Bezug auf Figur 2 noch näher erläutert wird. Optional kann die Vorrichtung zur Drucksteuerung und/oder -regelung als Vorrichtung 150 ausgeführt sein, die mit Bezug auf Figur 3 beschrieben wird. Von der Vorrichtung zur Drucksteuerung und/oder -regelung 50 oder 150 gelangt das Gas über eine Leitung 52 zu Kraftstoffeinspritzvorrichtungen einer schematisch dargestellten Brennkraftmaschine 54.

Figur 2 zeigt die insgesamt mit 50 bezeichnete Vorrichtung zur Drucksteuerung und/oder - regelung in einem Längsschnitt. Die Vorrichtung 50 weist einen Grundkörper 1 auf, an dem eine gasdichte Absperreinrichtung 2 und ein Ventil 3 angeordnet sind.

Der Grundkörper 1 weist eine Bohrung 4a auf, in die über die Leitung 48 von dem Kraftstoffspeicher 46 unter Speicherdruck stehendes Gas einströmen kann. Über die Absperreinrichtung 2 gelangt das Gas in eine Bohrung 4b und von dort über das Ventil 3 zu einer Bohrung 4c, in der das Gas auf Systemdruck gesenkt ist und von dort über die Leitung 52 der Brennkraftmaschine 54 zugeführt werden kann.

Das Ventil 3 kann ein Schiebesitzventil sein, insbesondere vom Typ "Bosch ZME (Zumesseinheit) Nr. 0928400XXX".

Das Ventil 3 weist einen Magnettopf 5 auf, der an den Grundkörper 1 angrenzend angeordnet ist. In dem Magnettopf 5 ist eine Magnetspule 6 vorgesehen, die an ihrem dem Grundkörper 1 zugewandten Ende einen Magnetkern 7 aufweist. Der Magnetkern 7 ist gegenüber der Magnetspule 6 mit Hilfe einer Dichtung 8 abgedichtet.

In dem von der Magnetspule 6 begrenzten Raum ist ein Magnetanker 9 angeordnet, der mit einem Stößel 10 verbunden ist. Dieser durchdringt den Magnetkern 7 und ist mit einem Ventilkörper 11 verbunden. Der Ventilkörper 11 stützt sich auf der dem Magnetanker 9 abgewandten Seite über eine Ventilfeder 12 an einer Endscheibe 13 ab. Die Endscheibe 13 liegt an einem im Grundkörper 1 gebildeten Absatz an und bildet eine kreisförmige Öffnung 14, die zur Bohrung 4c führt.

Der Magnetkern 7 weist eine zylindrische Hülse 15 auf, die in dem Grundkörper 1 aufgenommen ist und den Ventilkörper 11 umgibt. Die Hülse 15 weist auf der zur Bohrung 4b weisenden Seite eine vorzugsweise schlitzförmige Drosselöffnung 16 auf.

Die Absperreinrichtung 2 weist einen Magnettopf 20 auf, in dem eine Magnetspule 21 angeordnet ist. In der Magnetspule 21 ist ein Magnetanker 22 vorgesehen, der sich über eine Feder 23 an dem Magnettopf 20 abstützt.

Der Magnetanker 22 weist auf der der Feder 23 gegenüberliegenden Seite eine Kolbenstange 24 auf, die mit einer ringförmigen Dichtung 25 versehen ist. Die Dichtung 25 dichtet die Kolbenstange 24 gegenüber einem benachbart zur Bohrung 4b gebildeten Ventilsitz 26 ab.

Die Kolbenstange 24 weist eine zentrische Öffnung 27 auf, die mit Hilfe eines Dichtelements 28 abgedichtet ist. Das Dichtelement 28 ist in einem Kopfabschnitt 29 des Magnetankers 22 angeordnet. Der Kopfabschnitt 29 weist benachbart zum Dichtelement 28 einen Stift 30 auf, der sich quer zur Längsrichtung des Magnetankers 22 erstreckt und mit seinen beiden Enden über den Kopfabschnitt 29 hervorsteht. In diesem Bereich sind die Enden des Stifts in einer Bohrung 31 aufgenommen, die Teil eines Hülsenabschnitts 32 der Kolbenstange 24 ist.

### Die Vorrichtung zur Drucksteuerung und/oder -regelung 50 arbeitet wie folgt:

Im Regelbetrieb des Ventils 3 ist die Absperreinrichtung 2 geöffnet. Um den Druck des gasförmigen Kraftstoffs, der in den Bohrungen 4a und 4b gleich dem Druck im hydraulisch vorgeschalteten Kraftstoffspeicher 46 und gleich dem Druck in der Leitung 48 ist, auf einen in der Bohrung 4c und in der Leitung 52 anliegenden Systemdruck senken zu können, muss der Ventilkörper 11 des Ventils 3 entsprechend angesteuert werden. Dies erfolgt durch entsprechende Bestromung der Magnetspule 6. Das Ansteuersignal für die Bestromung des Ventils 3 ist ein pulsweitenmoduliertes bzw. analoges Signal mit einer Frequenz von typischerweise 100 bis 800 Hz.

Wenn die Magnetspule 6 nicht bestromt ist, drückt die Ventilfeder 12 den Ventilkörper 11 in eine Lage, in der der Ventilkörper 11 die Drosselöffnung 16 nicht verdeckt. Bei Bestromung der Magnetspule 6 wird der Magnetanker 9 und damit der Stößel 10 und der Ventilkörper 11 entgegen der Wirkung der Ventilfeder 12 in Richtung auf die Endscheibe 13 bewegt. Dabei gelangt der Ventilkörper 11 in Überdeckungslage mit der Drosselöffnung 16. In Abhängigkeit des Überdeckungsgrads zwischen dem Ventilkörper 11 und der Drosselöffnung 16 erfolgt eine mehr oder weniger starke Drosselung des Gasdrucks aus Bohrung 4b in Bohrung 4c. Hierdurch wird der gewünschte Systemdruck eingestellt.

Die Absperreinrichtung 2 ist bei abgestellter Brennkraftmaschine 54 geschlossen. In diesem Zustand drückt die Feder 23 den Magnetanker 22 mit seinem Dichtelement 28 auf die Öffnung 27 in der Kolbenstange 24. Diese wiederum drückt mit ihrer Dichtung 25 auf den Ventilsitz 26. Die Absperreinrichtung 2 sperrt somit die Bohrung 4a gegenüber der Bohrung 4b gasdicht ab.

Bei Bestromung der Magnetspule 21 wird eine Magnetkraft erzeugt, die den Magnetanker 22 entgegen der Kraft der Feder 23 von der Öffnung 27 wegbewegt, so dass das Dichtelement 28 die Öffnung 27 nicht mehr verschließt. Hierdurch können sich der Druck, der in der Bohrung 4b hinter der Öffnung 27 anliegt, und der Druck in der Bohrung 4a, der vor der Öffnung 27 anliegt, aneinander angleichen. Bei weiterer Bestromung des Magnetankers 22 gelangt der Stift 30 in Anlage mit einer Wandung der Bohrung 31, so dass die Kolbenstange 24 und damit die Dichtung 25 vom Ventilsitz 26 wegbewegt wird. Hierdurch wird eine Verbindung zwischen der Bohrung 4a und der Bohrung 4b hergestellt. Dies entspricht dem o.g. offenen Zustand der Absperreinrichtung 2.

In Figur 3 ist die insgesamt mit 150 bezeichnete Vorrichtung zur Drucksteuerung und/oder - regelung dargestellt. Diese weist ein Gehäuse 101 auf, an dem ein nur schematisch angedeuteter Elektromagnet 102 angeordnet ist. In dem Gehäuse 101 ist ein Ventilschieber 103 verschieblich angeordnet. Dieser ist mit Hilfe einer Ventilfeder 104 in einer dichtenden Grundstellung gehalten.

Der Ventilschieber 103 weist auf der der Ventilfeder 104 abgewandten Seite eine ringförmige Dichtung 105 auf, die in der Grundstellung des Ventilschiebers 103 an einem im Gehäuse 101 gebildeten Ventilsitz 106 anliegt. (In Figur 3 ist der Ventilschieber 103 außerhalb der Grundstellung dargestellt.)

Zu dem Ventilsitz 106 führt die mit Bezug auf Figur 1 beschriebene Leitung 48. Auf der dem Ventilsitz 106 fluidisch nachgeschalteten Seite ist die mit Bezug auf Figur 1 beschriebene Leitung 52 vorgesehen.

Der Leitung 48 ist ein Drucksensor 109 zugeordnet, der einen Speicherdruck p₁ erfasst.

An der Leitung 52 ist ein Drucksensor 110 vorgesehen, der einen Systemdruck p₂ erfasst.

Die Vorrichtung 150 ist in der Grundstellung geschlossen, da die Feder 104 die Dichtung 105 auf den Ventilsitz 106 drückt. Hierdurch sind die Leitung 48 und die Leitung 52 zueinander gasdicht abgesperrt.

Um unter Speicherdruck p₁ stehenden, gasförmigen Kraftstoff aus der Leitung 48 in die Leitung 52 zuführen und auf einen Systemdruck p₂ senken zu können, wird die Vorrichtung 150 entsprechend angesteuert. Dies geschieht durch eine Bestromung des Elektromagneten 102, der den Ventilschieber 103 entgegen der Wirkung der Ventilfeder 104 vom Ventilsitz 106 wegbewegt, so dass eine fluidische Verbindung zwischen der Leitung 48 und der Leitung 52 geschaffen wird.

Dabei bildet der Ventilsitz 106 gemeinsam mit der Dichtung 105 eine Drosselstelle, wodurch der Speicherdruck p₁ auf den Systemdruck p₂ gedrosselt wird.

Die Bestromung des Elektromagneten 102 kann mit Hilfe eines nicht dargestellten Steuergeräts gesteuert werden. Das Steuergerät ist mit den Drucksensoren 109 und 110 gekoppelt. Mit Hilfe des Drucksensors 109 kann der Speicherdruck p₁ erfasst und dem Steuergerät übermittelt werden. Das Steuergerät kann mit Hilfe von abgespeicherten Kennlinien eine geeignete Bestromung des Elektromagneten 102 ermitteln, um den Ventilschieber 103 so zu öffnen, dass der gewünschte Systemdruck p₂ in der Leitung 52 anliegt. Mit Hilfe des Drucksensors 110 kann der tatsächlich in der Leitung 52 anliegende Systemdruck p₂ᵢₛₜ erfasst werden. Der erfasste Wert kann dem Steuergerät übermittelt werden, das einen Vergleich mit einem Sollwert p₂ₛₒₗₗ durchführen kann, um gegebenenfalls die Bestromung des Elektromagneten 102 anpassen zu können.

## Patentansprüche

1. Kraftstoffversorgungsanlage (44) für eine gasbetriebene Brennkraftmaschine (54), wobei die Kraftstoffversorgungsanlage (44) eine Vorrichtung zur Drucksteuerung und/oder -regelung (50, 150) aufweist, um den Druck des gasförmigen Kraftstoffs von einem Speicherdruck (p₁) auf einen niedrigeren Systemdruck (p₂) zu senken, **dadurch gekennzeichnet, dass** die Vorrichtung zur Drucksteuerung und/oder -regelung (50, 150) ein elektromagnetisch betätigtes Ventil (3, 103) aufweist.

2. Kraftstoffversorgungsanlage (44) nach Anspruch 1, **dadurch gekennzeichnet, dass** das Ventil (3, 103) ein Schieberventil ist.

3. Kraftstoffversorgungsanlage (44) nach einem der vorhergehenden Ansprüche, **dadurch gekennzeichnet, dass** die Vorrichtung zur Drucksteuerung und/oder -regelung (50, 150) eine gasdichte Absperreinrichtung (2) umfasst.

4. Kraftstoffversorgungsanlage (44) nach Anspruch 3, **dadurch gekennzeichnet, dass** das Ventil (3) die gasdichte Absperreinrichtung bildet.

5. Kraftstoffversorgungsanlage (44) nach Anspruch 3 oder 4, **dadurch gekennzeichnet, dass** dem Ventil (3) eine gasdichte Absperreinrichtung (2) vor- oder nachgeschaltet ist.

6. Kraftstoffversorgungsanlage (44) nach Anspruch 5, **dadurch gekennzeichnet, dass** die Absperreinrichtung (2) elektromagnetisch betätigt ist.

7. Kraftstoffversorgungsanlage (44) nach einem der Ansprüche 4 bis 6, **dadurch gekennzeichnet, dass** das Ventil (3, 103) und die Absperreinrichtung (2) an einem gemeinsamen Grundkörper (1) oder in einem gemeinsamen Gehäuse (101) angeordnet sind.

8. Kraftstoffversorgungsanlage (44) nach einem der vorhergehenden Ansprüche, **dadurch gekennzeichnet, dass** die Vorrichtung zur Drucksteuerung und/oder -regelung (50, 150) ein Steuergerät zur Ansteuerung des oder der Elektromagneten des Ventils (3, 103) und/oder der Absperreinrichtung (2) aufweist.

9. Kraftstoffversorgungsanlage (44) nach einem der vorhergehenden Ansprüche, **dadurch gekennzeichnet, dass** die Vorrichtung zur Drucksteuerung und/oder -regelung (50, 150) Drucksensoren (109, 110) zur Erfassung des Speicherdrucks (p₁) und/oder des Systemdrucks (p₂) aufweist.

10. Kraftstoffversorgungsanlage (44) nach Anspruch 8 und 9, **dadurch gekennzeichnet, dass** die Drucksensoren (109, 110) mit dem Steuergerät gekoppelt sind.

11. Kraftstoffversorgungsanlage (44) nach einem der vorhergehenden Ansprüche, **dadurch gekennzeichnet, dass** der Speicherdruck (p₁) bei einem Wert von Systemdruck (p₂) bis Höchstdruck, beispielsweise 300 bar, liegen kann.

12. Kraftstoffversorgungsanlage (44) nach einem der vorhergehenden Ansprüche, **dadurch gekennzeichnet, dass** der Systemdruck (p₂) Werte kleiner 20 bar, insbesondere von 2 bis 15 bar annehmen kann.

13. Verfahren zum Betrieb einer Kraftstoffversorgungsanlage (44) nach einem der vorhergehenden Ansprüche, **dadurch gekennzeichnet, dass** der Systemdruck (p₂) in Abhängigkeit des von der Brennkraftmaschine (54) benötigten Kraftstoff-Volumenstroms eingestellt wird.
